# EUROPÄISCHE PATENTSCHRIFT

(11) **EP 1 407 128 B1**
(45) Veröffentlichungstag und Bekanntmachung des Hinweises auf die Patenterteilung: **12.01.2005**
(21) Anmeldenummer: 02747232.3
(22) Anmeldetag: 20.06.2002
(51) Int. Cl.: F02D 41/22, G01L 27/00

(54) **VERFAHREN UND VORRICHTUNG ZUR ÜBERWACHUNG EINES DRUCKSENSORS**
METHOD AND DEVICE FOR MONITORING A PRESSURE SENSOR
PROCEDE ET DISPOSITIF POUR LA SURVEILLANCE D'UN CAPTEUR DE PRESSION

(30) Priorität: 06.07.2001 DE 10132833
(43) Veröffentlichungstag der Anmeldung: 14.04.2004
(73) Patentinhaber: ROBERT BOSCH GMBH, 70442 Stuttgart (DE)
(72) Erfinder: DENZ, Helmut, 70184 Stuttgart (DE); WILD, Ernst, 71739 Oberriexingen (DE)
(86) Internationale Anmeldenummer: PCT/DE2002/002255
(87) Internationale Veröffentlichungsnummer: WO 2003/004849

(56) Entgegenhaltungen:
- EP-A- 0 769 612
- WO-A-01/02720
- DE-A- 19 727 204
- US-A- 5 808 189

## Beschreibung

### Stand der Technik

Die Erfindung betrifft ein Verfahren und eine Vorrichtung zur Überwachung eines Drucksensors, welcher in Verbindung mit der Steuerung eines Verbrennungsmotors den Umgebungsdruck des Motors bzw. des mit diesem Motor ausgestatteten Fahrzeugs erfasst.

Steuersysteme für Verbrennungsmotoren umfassen eine Vielzahl von Sensoren, deren Signale im Zusammenhang mit der Lasterfassung für die Motorsteuerung ausgewertet werden. Der typische Sensorenumfang umfasst dabei einen Luftmassenmesser zur Messung des dem Verbrennungsmotor zugeführten Luftmassenstroms, einen Umgebungsdrucksensor zur Messung des Umgebungsdrucks des Verbrennungsmotors (Atmosphärendruck), Sensoren zur Messung des Drosselklappenwinkels in Verbindung mit einer Drosselverstelleinrichtung sowie gegebenenfalls einen Sensor zur Messung der Ansauglufttemperatur. Da die Signale dieser Sensoren zur Ermittlung der Motorlast Verwendung finden, die wiederum für die Bildung der Stellgrößen wesentlich ist, besitzen diese Signale Einfluss auf die Gemischbildung und letztendlich die Abgaszusammensetzung. Eine Überwachung der korrekten Funktion dieser Sensoren ist also mit Blick auf die steigenden Anforderungen an die Abgaszusammensetzung notwendig.

In Verbindung mit der Erfassung des Drosselklappenwinkels zeigt beispielsweise die DE-A 40 04 085 (US-Patent 5 260 877) die Verwendung von zwei zueinander redundanter Sensoren zur Erfassung des Drosselklappenwinkels, aus deren Signalen durch Vergleich der Signale miteinander eine Fehlfunktion eines der Sensoren abgeleitet wird.

Zur Überwachung eines Luftmassenmessers wird in der DE-A 195 13 370 (US-Patent 5 755 201) eine Vorgehensweise beschrieben, bei welcher ein Fehler im Bereich des Luftmassen- . messers angenommen wird, wenn das Ausgangssignal eines Lambda-Reglers einen vorgegebenen Grenzwert übersteigt, d.h. eine übergroße Korrektur der Gemischbildung durch den LambdaRegler erkannt wird.

Eine weitere Vorgehensweise zur Überwachung der Funktionsweise des Luftmassenmessers beschreibt die DE-A 197 40 918. Dort wird auf der Basis von Modell- und Messgrößen abhängig vom erfassten Drosselklappenwinkel der Luftmassenstrom über der Drosselklappe ermittelt und mit dem vom Luftmassenmesser gemessenen Luftmassenstrom verglichen. In Abhängigkeit der Abweichung zwischen den beiden Größen wird wenigstens ein Korrekturfaktor gebildet. Die Größe dieses Korrekturfaktors kann als Indiz für Fehler im Bereich der Luftmassenerfassung über den Luftmassenmesser und/oder im Bereich der Luftmassenerfassung über den Drosselklappenwinkel herangezogen werden.

In der DE 197 50 191 A1 wird ein Luftmassenstromsignal gemessen und ein weiteres Luftmassenstromsignal auf der Basis eines Drosselklappenstellungssignals berechnet. Die beiden Signale werden zueinander abgeglichen. Zur Fehlerüberwachung werden die abgeglichenen Signale miteinander verglichen, wobei ein Fehler erkannt wird, wenn die beiden Signale unzulässig voneinander abweichen. Bei erkannten Fehlern wird eine Momentenreduzierung und eine Fehlerseparierung vorgenommen.

Da der Signalwert des Umgebungsdrucksensors je nach Ausführungsbeispiel z.B. bei dem beschriebenen Abgleich oder bei der Einstellung der Drosselklappe des Verbrennungsmotors eine Rolle spielt, besteht auch Bedarf an einer Fehlererkennung dieses Sensors.

Aus der nicht vorveröffentlichten deutschen Patentanmeldung DE 1 00 21 639.0 vom 04. Mai 2000 ist die Überwachung eines Umgebungsdrucksensors bekannt. Dort wird im ungedrosselten Betrieb des Verbrennungsmotors (d.h. bei geöffneter Drosselklappe) das Signal des Umgebungsdrucksensors mit einem berechneten Saugrohrdruckwert verglichen. Bei unzulässigen Abweichungen dieser beiden Werte ist von einer Fehlfunktion auszugehen.

### Vorteile der Erfindung

Die nachfolgend beschriebene Vorgehensweise erlaubt eine eindeutige Erkennung einer Fehlfunktion im Bereich der Umgebungsdruckerfassung. Damit wird ein weiterer Signalpfad, der im Fehlerfall für die Abgaszusammensetzung relevante Auswirkungen haben kann, abgesichert. Entsprechende Forderungen werden zuverlässig erfüllt.

Besonders vorteilhaft ist, dass sich die Erkennung auf vorhandene Signale abstützt, ohne dass zusätzliche Bauelemente, beispielsweise ein redundanter Sensor, eingesetzt werden müssen.

Weitere Vorteile ergeben sich aus der nachfolgenden Beschreibung von Ausführungsbeispielen bzw. aus den abhängigen Patentansprüchen.

### Zeichnung

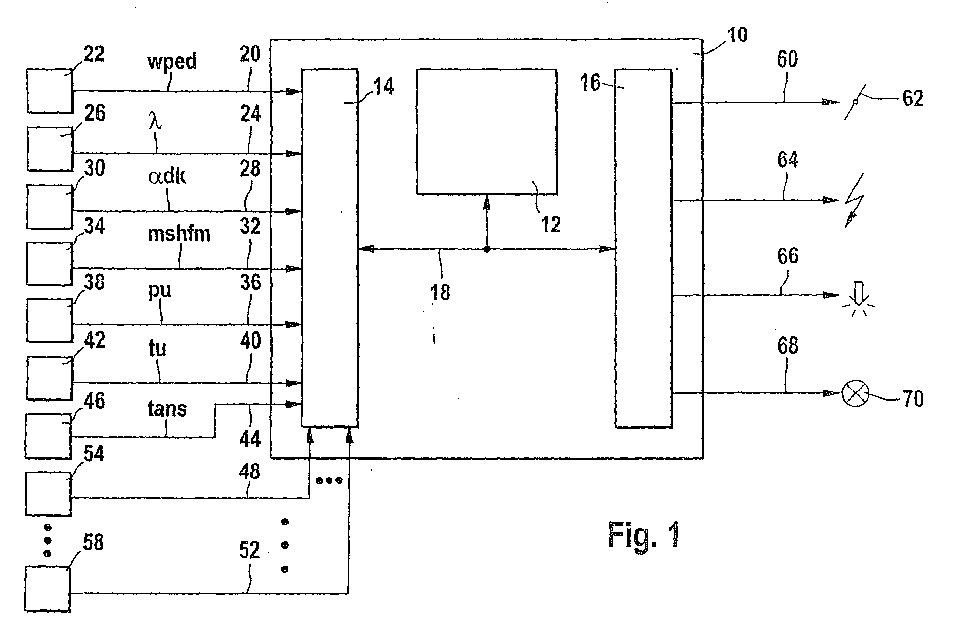

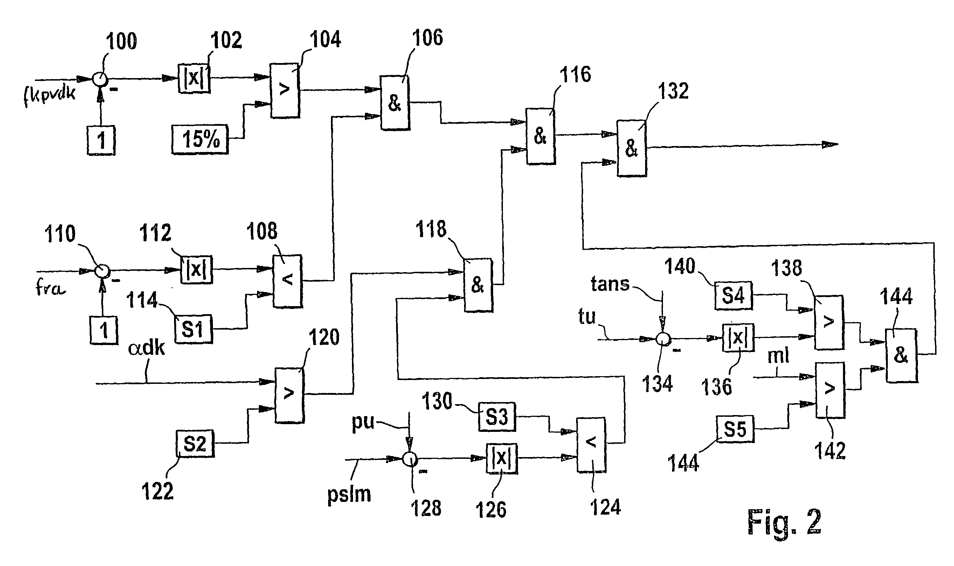

Die Erfindung wird nachstehend anhand der in der Zeichnung dargestellten Ausführungsformen näher erläutert. Figur 1 zeigt dabei ein Übersichtsblockschaltbild einer Steuereinheit zur Steuerung eines Verbrennungsmotors, während in Figur 2 ein detailliertes Ablaufdiagramm des bevorzugten Ausführungsbeispiels zur Erkennung eines Fehlers im Umgebungsdrucksensor gezeigt ist.

### Beschreibung von Ausführungsbeispielen

Figur 1 zeigt eine elektronische Steuereinheit 10 zur Steuerung eines Verbrennungsmotors, die über einen Mikrocomputer 12, eine Eingangsschaltung 14, eine Ausgangsschaltung 16 sowie ein diese Elemente verbindendes Kommunikationssystem 18 umfasst. Der Eingangsschaltung 14 werden verschiedene Eingangsleitungen zugeführt, welche die Steuereinheit 10 mit Messeinrichtungen zur Erfassung verschiedener Betriebsgrößen des Motors und/oder des Fahrzeugs verbindet. Mit Blick auf das nachfolgend beschriebene bevorzugte Ausführungsbeispiel sind insbesondere die folgenden Eingangsleitungen zu nennen: Eine Eingangsleitung 20 von einer Messeinrichtung 22 zur Erfassung der Fahrpedalstellung wped, eine Eingangsleitung 24 von wenigstens einem Abgassensor 26 zur Erfassung einer Größe für die Abgaszusammensetzung lambda, eine Eingangsleitung 28 von wenigstens einer Messeinrichtung 30 zur Erfassung des Drosselklappenwinkels αdk, eine Eingangsleitung 32 von einem Luftmassenmesser 34 zur Erfassung des dem Verbrennungsmotor zugeführten Luftmassenstroms mshfm, eine Eingangsleitung 36 von einem Umgebungsdrucksensor 38 zur Erfassung des Umgebungsdrucks pu (entspricht dem Atmosphärendruck), eine Eingangsleitung 40 von einem Temperatursensor 42 zur Erfassung der Umgebungstemperatur tu, eine Eingangsleitung 44 von einer Messeinrichtung 46 zur Erfassung der Ansauglufttemperatur tans. Ferner sind Eingangsleitungen 48 bis 52 von Messeinrichtungen 54 bis 58 vorgesehen, über die weitere Betriebsgrößen wie beispielsweise Saugrohrdruck, Motortemperatur, Motordrehzahl, etc. erfasst werden. Über die Ausgangsschaltung 16 werden Steuergrößen für den Verbrennungsmotor über entsprechende Ausgangsleitungen ausgegeben. In Figur 1 sind beispielhaft eine Ausgangsleitung 60 zur Steuerung einer elektrisch betätigbaren Drosselklappe 62, Ausgangsleitungen 64 zur Einstellung der Zündung, Ausgangsleitungen 66 zur Ansteuerung von Einspritzventilen und eine Ausgangsleitung 68 zur Betätigung einer Warnlampe 70 dargestellt.

Im bevorzugten Ausführungsbeispiel wird zur Steuerung des Verbrennungsmotors im Rahmen der im Mikrocomputer 12 implementierten Programme abhängig von wenigstens dem Fahrpedalstellungssignal wped ein Sollmomentenwert vorgegeben, welcher in einen Solldrosselklappenwinkel umgewandelt wird. Dieser wird im Rahmen einer Lageregelung durch Betätigen der elektrisch steuerbaren Drosselklappe 62 eingestellt. Die Stellsignale für Zündung und Kraftstoffeinspritzung werden auf der Basis des durch Last und Drehzahl charakterisierten Betriebszustandes sowie gegebenenfalls der Abweichung zwischen Ist- und Sollmoment gebildet.

Ferner wird auf der Basis des Luftmassensignals ein Istwert (z.B. Istmomentenwert) gebildet. Aus Redundanzgründen wird abhängig von Drosselklappenstellungssignal ein Wert für die Luftmassenstömung über der Drosselklappe bestimmt. Dabei wird bevorzugt ein mittels eines Saugrohrmodells ermittelter modellierter Saugrohrdruck verwendet. Durch Vergleich der Luftmassenströme werden Korrekturwerte ermittelt, die die Luftmassenstromerfassung und die Drosselklappeneinstellung korrigieren. Auch eine solche Vorgehensweise ist aus dem Stand der Technik bekannt.

Sowohl bei der Berechnung der Luftmassenstömung über der Drosselklappe als auch bei Berechnung in den Solldrosselklappenwinkel wird das Umgebungsdrucksignal ausgewertet. Ferner spielen der vom Luftmassenmesser gemessene Luftmassenstrom, der durch die Drosselklappengeber gemessenen Drosselklappenwinkel und, wenn erfasst, die durch den Temperatursensor gemessene Ansauglufttemperatur eine wichtige Rolle. Eine Überwachung dieser wesentlichen Einflussgrößen ist notwendig. Dabei erfolgt die Überwachung der Drosselklappenwinkelerfassung in der Regel durch redundante Sensoren, deren Abweichung auf eine vorgegebene Toleranz überprüft wird. Eine weitere Diagnose stützt sich auf die unterschiedliche Ermittlung des Luftmassenstroms, der zum einen mit dem Luftmassenmesser gemessen, zum anderen abhängig vom Drosselklappenwinkel berechnet wird. Liegen diese beiden Werte weit auseinander, wird zusätzlich abgefragt, ob die Lambdaregelung das Luft-/Kraftstoffgemisch sehr stark korrigieren muss. Ist dies der Fall, wird von einem Fehler des Luftmassenmessers ausgegangen, denn im bevorzugten Ausführungsbeispiel stützt sich die Berechnung der einzuspritzenden Kraftstoffmasse auf dieses Signal. Im anderen Fall wird von einem Fehler im sogenannten Drosselklappensystem (Größen Drosselklappenwinkel, Umgebungsdruck, ggf. Ansauglufttemperatur und Saugrohrdruck) ausgegangen. Letzteres könnte durch die Umgebungsdruckerfassung, die Ansauglufttemperaturerfassung, durch eine Leckage im Saugrohrtrakt oder durch die Saugrohrdruckerfassung bedingt sein.

In diesem bevorzugten Ausführungsbeispiel hat es sich gezeigt, dass das Umgebungsdrucksignal dann als fehlerhaft anzunehmen ist, wenn wie oben dargestellt das Drosselklappensystem fehlerhaft ist und die Drosselklappe weit geöffnet ist und der Umgebungsdruck vom Saugrohrdruck stark verschieden ist und, wenn dieses Signal erfasst wird, das Ansauglufttemperatursignal plausibel ist.

Verallgemeinernd ist daher zur Diagnose des Umgebungsdrucksignals wie folgt vorzugehen. Das Umgebungsdrucksignal wird als fehlerhaft angenommen, wenn das abhängig vom Drosselklappenwinkel gebildete Luftmassensignal fehlerbehaftet ist, die Drosselklappe weit offen ist und der Umgebungsdruck vom Saugrohrdruck stark verschieden ist und (bei Verwendung zur Bestimmung des drosselklappenwinkelgestützten Luftmassensignals) die Ansauglufttemperaturerfassung plausibel ist.

Ist also das Signal des Umgebungsdrucksensors verfälscht, so muss nach längerem Fahrbetrieb mit Volllastanteilen ein Fehler erkannt werden. Ist in die Diagnose wenigstens ein Faktor der Lambda-Regelung (der das Ausmaß der Gemischkorrektur repräsentiert) mit ein bezogen, so wird ein Fehler nur bei aktiver Regelung erkannt. Würde man nach Zurücksetzen des Faktors die Messung bei abgeschalteter Lambdaregelung wiederholen, so wird, da ein Fehler im Drosselklappensystem nicht überprüft werden kann, kein Fehler des Umgebungsdrucksensors angezeigt.

Figur 2 zeigt ein Ablaufdiagramm zur Durchführung der oben dargestellten Diagnose des Umgebungsdrucksensors im bevorzugten Ausführungsbeispiel. Das Ablaufdiagramm repräsentiert dabei ein im Mikrocomputer 12 der elektronischen Steuereinheit 10 ablaufendes Programm, wobei die einzelnen Blöcke, Programmschritte, Programmteile oder Programme darstellen, während die Verbindungslinien den Informationsfluss repräsentieren.

Zunächst wird der Abgleichfaktor fkpvdk eingelesen, welcher aus der Abweichung zwischen dem gemessenen Luftmassenstrom und den abhängig vom Drosselklappenwinkel berechneten Luftmassenstrom repräsentiert. Dieser Abgleichfaktor wird wie beispielsweise aus dem Stand der Technik bekannt bestimmt. Der Faktor wird beispielsweise aus einer Integration dieser Abweichung ermittelt. Dieser Faktor dient zur Anpassung der Berechnung des Luftmassenstroms über der Drosselklappe und bewirkt letztendlich eine Anpassung der Massenströme (gemessener und berechneter) aneinander. Von dem Korrekturfaktor wird im der konkreten Ausführung in der Verknüpfungsstelle 100 der Wert 1 abgezogen, in 102 der Betrag dieses Wertes gebildet und im Vergleicher 104 mit einem Grenzwert verglichen, beispielsweise 15 Prozent. Der Korrekturfaktor stellt ein Maß dar, wie stark der über die Drosselklappenwinkel berechnete Luftmassenstrom von dem vom Luftmassenmesser gemessenen abweicht. Der Vergleicher 104 erzeugt ein Signal, wenn der Korrekturfaktor größer als der vorgegebene Grenzwert ist. Ein zweiter Vergleichers 108 überprüft, ob ein die Gemischkorrektur repräsentierende Größe fra der Lambda-Regelung (z.B. der Langzeitanteil der Gemischkorrektur) einen vorgegebenen Grenzwert überschreitet. In einer konkreten Ausführung wird vom Gemischadaptionsfaktor in der Verknüpfungsstelle 110 der Wert 1 abgezogen, in 112 der Betrag dieser Differenz gebildet und im Vergleicher 108 mit dem Grenzwert S1, der in 114 gespeichert ist, verglichen. Unterschreitet der Gemischadaptionsfaktor diesen Grenzwert, so ist davon auszugehen, dass das vom Luftmassenmesser gemessene Luftmassensignal korrekt ist. Letzteres ist nämlich die Grundlage für die Kraftstoffmassenberechnung und somit für die Gemischbildung bestimmend. Wenn das gemessene Luftmassensignal korrekt ist, stimmt auch die Gemischzusammensetzung, so dass die Lambdaregelung nicht stark korrigierend einzugreifen braucht. Ist der aus dem Gemischadaptionsfaktor abgeleitete Wert daher kleiner als der Grenzwert, so erzeugt der Vergleicher 108 ein positives Signal. Die Signale der Vergleicher 108 und 104 werden in einer UND-Verknüpfung 106 zusammengeführt. Weicht der über die Drosselklappenstellung berechnete Luftmassenstrom vom gemessenen stark ab (positives Signal des Vergleichers 104) und ist der Gemischkorrekturfaktor unterhalb des Grenzwertes (positives Signal des Vergleichers 108), so erzeugt die UND-Verknüpfung 106 ein Ausgangssignal, welches einen Fehler im Drosselklappensystem (Berechnung des Luftmassenstrom abhängig vom Drosselklappenwinkel und anderen Betriebsgrößen) signalisiert.

In einem Vergleicher 120 wird überprüft, ob der gemessene Drosselklappenwinkel αdk einen Schwellenwert S2 (122) übersteigt. Ferner wird in einem Vergleicher 124 überprüft, ob ein in 126 gebildeter Betrag der in 128 gebildeten Abweichung zwischen Saugrohrdruck (bevorzugt modelliert) und Umgebungsdruck pu einen Schwellenwert S3 (130) überschreitet bzw. ob dieser Schwellenwert kleiner als der Betrag ist. Die Signale der Vergleicher 120 und 124 werden von einer UND-Verknüpfung 118 zusammengefasst. Geben beide Vergleicher positive Signale ab (Drosselklappenwinkel größer als S2, d.h. nahezu vollständig geöffnet, Betrag der Abweichung zwischen Saugrohrdruck und Umgebungsdruck größer als S3) erzeugt die Und-Verknüpfung 118 ein positives Signal, welches einen Fehler beim Druckvergleich in Volllast anzeigt. Da wie im eingangs genannten Stand der Technik dargestellt auf der Basis des Luftmassenmessersignals der Saugrohrdruck modelliert wird, wird bei offener Drosselklappe, wenn der Drosselklappenwinkel den Schwellenwert S2 unterschreitet, der Umgebungsdruck mit dem modulierten Saugrohrdruck verglichen. Beide Werte müssen bei fehlerfreiem Umgebungsdruck und Saugrohrdruck im Wesentlichen übereinstimmen. Wird also dennoch eine Abweichung zwischen Umgebungsdruck und Saugrohrdruck erkannt, so muss, da das Luftmassenmessersignal korrekt ist, der Fehler im Lufttemperatur- oder Umgebungsdrucksensor liegen.

Die Signale der Und-Verknüpfungen 106 und 118 werden einer weiteren Und-Verknüpfung 116 zugeführt. Diese erzeugt ein positives Signal, wenn an ihren Eingängen entsprechende Signale der Verknüpfungen 106 und 118 liegen, d.h. wenn das Drosselklappensystem fehlerbehaftet und der Druckvergleich fehlerhaft war. In diesem Fall ist ein Fehler in der Saugrohrdruckermittlung auszuschließen (da die Luftmassenmessung in Ordnung ist), so dass das positive Ausgangssignal der Und-Verknüpfung 116 einen Fehler im Umgebungsdrucksensor oder im Lufttemperatursensor anzeigt.

Die Plausibilität des Lufttemperatursignals wird dadurch festgestellt, dass die Abweichung zwischen dem Umgebungstemperatursignal tu und dem Ansauglufttemperatursignal tans in der Verknüpfungsstelle 134 gebildet wird. Der Betrag dieser Abweichung (136) wird in einem Vergleicher 138 mit einem Schwellenwert S4 (140) verglichen. Ferner wird ein Luftströmungssignal ml (z.B. das Signal des Luftmassenmesser) in einem Vergleicher 142 mit einem Schwellenwert S5 (144) verglichen. Ist also bei großer Luftströmung die Abweichung zwischen Umgebungstemperatur und Ansauglufttemperatur kleiner als ein Schwellenwert, so wird durch eine Und-Verknüpfung 144 der beiden Informationen von einem plausiblen Lufttemperatursensorsignal ausgegangen.

Die Signale der Und-Verknüpfungen 116 und 144 werden einer Und-Verknüpfung 132 zugeführt. Liegt an deren Eingänge positive Signale an (wenn das Lufttemperatursensorsignal plausibel ist und die UND-Verknüpfung 116 einen Fehler anzeigt), wird von einem Fehler des Umgebungsdrucksensors ausgegangen und ein entsprechendes Signal ausgesendet. Dieses führt dann beispielsweise zu einem Eintrag im Fehlerspeicher oder zu einem Ansteuern der Warnlampe 70.

Die oben beschriebene Vorgehensweise wird in einem bevorzugten Ausführungsbeispiel angewendet. In anderen Ausführungsbeispielen liegen andere Randbedingungen vor, beispielsweise wird der Saugrohrdruck nicht modelliert, sondern gemessen. In diesem Fall muss die korrekte Messung des Saugrohrdrucks auf andere Weise abgesichert sein. Ferner wird in anderen Ausführungsbeispielen die Umgebungslufttemperatur bei der Lasterfassung nicht berücksichtigt, so dass auf die Plausibilisierung dieses Signals verzichtet werden kann. Ferner werden in anderen Ausführungsbeispielen andere Korrekturfaktoren gebildet, welche die Abweichung zwischen drosselklappenbasiertem und gemessenem Luftmassensignal darstellen. Wesentlich ist nur, dass ein diese Abweichung beschreibender Faktor gebildet wird, der dann den geschilderten Vergleichsmaßnahmen unterworfen wird.

In anderen Ausführungsbeispielen wird wiederum auf die Bildung eines drosselklappenwinkelbasierten Luftmassensignals gänzlich verzichtet, so dass dort zur Überprüfung des Umgebungsdrucksensors lediglich ein Vergleich des gemessenen Luftmassensignals mit dem Gemischadaptionsfaktor stattfindet, um sicherzustellen, dass das gemessene Luftmassensignal korrekt ist. Dann wird bei geöffneter Drosselklappe die Abweichung zwischen Saugrohrdruck und Umgebungsdruck auf einen vorbestimmten Grenzwert überprüft, so dass ein Fehler im Umgebungsdrucksensor festgestellt wird, wenn bei korrektem gemessenem Luftmassensignal eine zu große Abweichung zwischen Umgebungsdruck und Saugrohrdruck bei weit geöffneter Drosselklappe vorliegt.

Ferner sind die anhand Figur 2 dargestellt Rechen- und Vergleichsschritte beispielhaft. Andere Realisierungen sind möglich, z.B. werden die Faktoren direkt verglichen (ohne Subtraktion von 1).

## Patentansprüche

1. Verfahren zur Überwachung eines Drucksensors, welcher einen den Umgebungsdruck eines Verbrennungsmotors repräsentierenden Wert ermittelt, wobei ein Maß für das Ausmaß der Korrektur der Gemischzusammensetzung durch ein Gemischregelsystem gebildet wird, ein Maß für den Drosselklappenwinkel und ein Maß für die zugeführte Luftmasse erfasst wird, **dadurch gekennzeichnet, dass** ein Fehler im Bereich der Umgebungsdruckermittlung erkannt wird auf der Basis des Ausmaß der Korrektur der Gemischzusammensetzung durch das Gemischregelsystem, des Drosselklappenwinkels und der zugeführten Luftmasse sowie eines Plausibilitätsvergleichs des Umgebungsdrucks bei weit geöffneter Drosselklappe.

2. Verfahren nach Anspruch 1, **dadurch gekennzeichnet, dass** abhängig vom Drosselklappenwinkel ein Luftmassenwert berechnet wird, wobei zwischen der gemessenen zugeführten Luftmasse und dem berechneten Luftmassenwert ein Abweichungsfaktor gebildet wird, der mit einem vorgegebenen Grenzwert verglichen wird und bei unzulässiger Abweichung ein Fehler in der Füllungserfassung erkannt wird.

3. Verfahren nach Anspruch 2, **dadurch gekennzeichnet, dass** bei unzulässiger Abweichung des Luftmassenwerte geprüft wird, ob die Korrektur des Gemischregelsystems kleiner als ein vorgegebener Grenzwert ist und in diesem Fall von einem Fehler im Bereich der drosselklappenabhängigen Luftmassenberechnung erkannt wird.

4. Verfahren nach Anspruch 3, **dadurch gekennzeichnet, dass** bei einem vermuteten Fehler in der Bestimmung des drosselklappenwinkelbasierten Luftmassensignals von einem Fehler im Umgebungsdrucksensor ausgegangen wird, wenn bei geöffneter Drosselklappe der Umgebungsdruck von einem Saugrohrdruck stark verschieden ist.

5. Verfahren nach Anspruch 4, **dadurch gekennzeichnet, dass** der Saugrohrdruck auf der Basis des gemessenen Luftmassensignals modelliert ist.

6. Verfahren nach einem der vorhergehenden Ansprüche, **dadurch gekennzeichnet, dass** die Ansauglufttemperatur ermittelt wird.

7. Verfahren nach einem der Ansprüche 2 bis 6, **dadurch gekennzeichnet, dass** zusätzlich die Fehlererkennung auf der Basis der Ansauglufttemperatur erfolgt, insbesondere ein Fehler im Umgebungsdrucksensor erkannt wird, wenn bei einem vermuteten Fehler in der Bestimmung des drosselklappenwinkelbasierten Luftmassensignals die Drosselklappe weit offen ist, der Umgebungsdruck vom Saugrohrdruck stark verschieden ist und das Ansauglufttemperatursignals plausibel ist.

8. Verfahren nach Anspruch 6 oder 7, **dadurch gekennzeichnet, dass** das Ansauglufttemperatursignal plausibel ist, wenn bei großer Luftströmung Umgebungstemperatur und Ansauglufttemperatur nicht unzulässig voneinander abweichen.

9. Vorrichtung zur Überwachung eines Drucksensors, der den Umgebungsdruck eines Verbrennungsmotors ermittelt, mit einer elektrischen Steuereinheit, welche ein Maß für das Ausmaß der Korrektur der Gemischzusammensetzung durch ein Gemischregelsystem bildet, ein Maß für den Drosselklappenwinkel und ein Maß für die zugeführte Luftmasse erfasst, **dadurch gekennzeichnet, dass** die Steuereinheit einen Fehler im Bereich der Umgebungsdruckermittlung erkennt auf der Basis des Ausmaß der Korrektur der Gemischzusammensetzung durch das Gemischregelsystem, des Drosselklappenwinkels und der zugeführten Luftmasse sowie eines Plausibilitätsvergleichs des Umgebungsdrucks bei weit geöffneter Drosselklappe.

## Claims

1. Method for monitoring a pressure sensor which determines a value representing the ambient pressure of an internal combustion engine, a measure of the degree of correction of the mixture composition being formed by a mixture regulating system, and a measure being sensed for the throttle valve angle and a measure being sensed for the air mass flow rate which is fed in, **characterized in that** a fault in the region of the ambient pressure determining means is detected on the basis of the degree of correction of the mixture composition by the mixture regulating system, the throttle valve angle and the air mass flow rate which is fed in, as well as on the basis of a plausibility comparison of the ambient pressure when the throttle valve is opened wide.

2. Method according to Claim 1, **characterized in that** an air mass flow rate value is calculated as a function of the throttle valve angle, a difference factor being formed between the measured air mass flow rate which is fed in and the calculated air mass flow rate value, which factor is compared with a predetermined limiting value and a fault in the sensing of the charge is detected when an inadmissible difference occurs.

3. Method according to Claim 2, **characterized in that**, when an inadmissible difference of the air mass flow rate values occurs it is checked whether the correction of the mixture regulating system is less than a predefined limiting value, and in this case a fault is detected in the region of the means for calculating the air mass flow rate as a function of the throttle angle.

4. Method according to Claim 3, **characterized in that**, when an error is suspected in the determination of the air mass flow rate signal which is based on the throttle valve angle, a fault in the ambient pressure sensor is assumed if the ambient pressure is very different from an intake manifold pressure when the throttle valve is open.

5. Method according to Claim 4, **characterized in that** the intake manifold pressure is modelled on the basis of the measured air mass flow signal.

6. Method according to one of the preceding claims, **characterized in that** the intake air temperature is determined.

7. Method according to one of Claims 2 to 6, **characterized in that** the fault detection is additionally carried out on the basis of the intake air temperature, in particular a fault in the ambient pressure sensor is detected if, when a fault is suspected in the determination of the air mass flow rate signal which is based on the throttle valve angle, the throttle valve is wide open, the ambient pressure is very different from the intake manifold pressure and the intake air temperature signal is plausible.

8. Method according to Claim 6 or 7, **characterized in that** the intake air temperature signal is plausible if the ambient temperature and intake air temperature do not differ from one another to an inadmissible degree when there is a large flow of air.

9. Device for monitoring a pressure sensor which determines the ambient pressure of an internal combustion engine, having an electrical control unit which forms a measure of the degree of correction of the mixture composition by means of a mixture regulating system, and senses a measure of the throttle valve angle and a measure of the air mass flow rate which is fed in, **characterized in that** the control unit detects a fault in the region of the ambient pressure determining means on the basis of the degree of correction of the mixture composition by the mixture regulating system, the throttle valve angle and the air mass flow rate which is fed in, as well as on the basis of a plausibility comparison of the ambient pressure when the throttle valve is opened wide.

## Revendications

1. Procédé pour la surveillance d'un capteur de pression, qui détermine une valeur représentative de la pression ambiante d'un moteur à combustion interne, en formant une mesure pour l'importance de la correction de la composition du mélange par un système de régulation du mélange, et en détectant une mesure pour l'angle du papillon des gaz et une mesure pour la quantité d'air fournie,
**caractérisé en ce qu'**
on identifie un défaut dans la région de la détermination de la pression ambiante sur la base de l'importance de la correction de la composition du mélange par le système de régulation du mélange, de l'angle du papillon des gaz et de la quantité d'air fournie ainsi que d'une comparaison de plausibilité de la pression ambiante avec le papillon des gaz largement ouvert.

2. Procédé selon la revendication 1,
**caractérisé en ce qu'**
on calcule une valeur de la quantité d'air en fonction de l'angle du papillon des gaz, en formant entre la quantité d'air fournie mesurée et la valeur de la quantité d'air calculée, un facteur de déviation que l'on compare à une valeur limite prédéterminée, et on identifie un défaut dans la détermination du remplissage pour une déviation inadmissible.

3. Procédé selon la revendication 2,
**caractérisé en ce que**
pour une déviation inadmissible de la valeur de la quantité d'air, on vérifie si la correction du système de régulation du mélange est inférieure à une valeur limite prédéterminée et dans ce cas on identifie un défaut dans la région du calcul de la quantité d'air en fonction du papillon des gaz.

4. Procédé selon la revendication 3,
**caractérisé en ce que**
en cas de défaut soupçonné dans la détermination du signal de quantité d'air basée sur l'angle du papillon des gaz, on conclut à un défaut dans le capteur de pression ambiante lorsque la pression ambiante diffère très fortement d'une pression du tuyau d'aspiration avec le papillon des gaz ouvert.

5. Procédé selon la revendication 4,
**caractérisé en ce que**
la pression tubulure d'admission est modélisée sur la base du signal de quantité d'air mesurée.

6. Procédé selon l'une quelconque des revendications précédentes,
**caractérisé en ce qu'**
on détermine la température de l'air d'admission.

7. Procédé selon l'une quelconque des revendications 2 à 6,
**caractérisé en ce qu'**
on effectue en outre l'identification d'un défaut sur la base de la température de l'air d'admission, en particulier un défaut dans le capteur de pression ambiante, lorsque, pour un défaut soupçonné dans la détermination du signal de quantité d'air basée sur l'angle du papillon des gaz, le papillon des gaz est largement ouvert, la pression ambiante diffère fortement de la pression du tuyau d'aspiration et le signal de la température de l'air d'admission est plausible.

8. Procédé selon la revendication 6 ou 7,
**caractérisé en ce que**
le signal de la température de l'air d'admission est plausible lorsque, avec un écoulement d'air important, la température ambiante et la température de l'air d'admission ne s'écartent pas l'une de l'autre de façon inadmissible.

9. Dispositif pour la surveillance d'un capteur de pression, qui détermine la pression ambiante d'un moteur à combustion interne, avec une unité de commande électrique, qui forme une mesure pour l'importance de la correction de la composition du mélange par un système de régulation du mélange, et détecte une mesure de l'angle du papillon des gaz et une mesure de la quantité d'air fournie,
**caractérisé en ce que**
l'unité de commande électrique identifie un défaut dans la région de la détermination de la pression ambiante sur la base de l'importance de la correction de la composition du mélange par le système de régulation du mélange, de l'angle du papillon des gaz et de la quantité d'air fournie ainsi que d'une comparaison de plausibilité de la pression ambiante avec le papillon des gaz largement ouvert.
